# EUROPEAN PATENT APPLICATION

(11) **EP 4 194 423 A1**
(43) Date of publication of application: **14.06.2023**
(21) Application number: 21823168.6
(22) Date of filing: 27.10.2021
(51) Int. Cl.: C04B 33/04, C04B 33/13, C04B 33/16, C04B 33/34, C03C 8/08, C03C 8/06, C03C 8/04, C04B 41/86

(54) **CERAMIC PLATE HAVING JADE-LIKE FISH-BELLY WHITE EFFECT, BLANK, PREPARATION METHOD THEREFOR AND USE THEREOF**

(30) Priority: 15.10.2021 CN 202111203717
(71) Applicant: Guangdong Tribeca Building Materials Technology Co., Ltd, Foshan City, Guangdong 528000 (CN)
(72) Inventor: ZHAN, Changchun, Foshan, Guangdong 528000 (CN); CHEN, Zongling, Foshan, Guangdong 528000 (CN); ZOU, Meixing, Foshan, Guangdong 528000 (CN); KE, Meiyun, Foshan, Guangdong 528000 (CN); DUAN, Chun, Foshan, Guangdong 528000 (CN); XIAO, Rong, Foshan, Guangdong 528000 (CN); YANG, Haiyun, Foshan, Guangdong 528000 (CN); PENG, Jiangtao, Foshan, Guangdong 528000 (CN); HUANG, Gang, Foshan, Guangdong 528000 (CN)
(74) Representative: Vitina, Maruta
(86) International application number: PCT/CN2021/126765
(87) International publication number: WO 2023/060651

(57) **Abstract**

A ceramic board blank, and a preparation and application thereof, and a jade Calacatta ceramic board. A raw material of the blank includes: 10-20 parts by weight of super white kaolin, 3-13 parts by weight of high plastic clay, 10-20 parts by weight of high white ball clay, 0-6 parts by weight of high white bentonite, 0-10 parts by weight of super white quartz sand, 5-16 parts by weight of a frit, 18-30 parts by weight of high white potassium sand, 12-30 parts by weight of high white sodium sand, 0-7 parts by weight of wollastonite, 0-4 parts by weight of talcum clay and 0.1-0.2 parts by weight of a blank reinforcing agent. A method for preparing the blank is provided. A method for preparing the jade Calacatta ceramic board is provided, where a blank powder or a colored blank is prepared according to the above method and the blank powder or the colored blank is subjected to forming to obtain the ceramic board. The blank can improve the flexural strength, whiteness, transparency, mildness, rupture modulus of the green body, contributing a high whiteness (≥ 75 degrees), a fine texture, a precise alignment and an integrated decoration to a ceramic board and a sintered stone. Moreover, the ceramic board and the sintered stone are as transparent, mild and fine as natural Calacatta stones.

## Description

### TECHNICAL FIELD

This application relates to ceramic plate, and more particularly to a ceramic board blank, and a preparation and application thereof, and a jade Calacatta ceramic board.

### BACKGROUND

Ceramic board and sintered stone have been considered as high-end ceramic manufacturing products. The whiteness of a blank of the commercially-available large size white ceramic sintered stone is almost within 65 degrees, and only some small-size sintered stones (900×1800 mm or smaller) show a whiteness of 70 degrees. This is because that most super white blanks have poor dry strength and formability, so that the large-sized tile is prone to cracking during the pressure-formation process. In addition, the entire decoration of the ceramic is crude, and the whiteness, transparency and mildness of a blank thereof are not high enough, failing to exhibit a jade Calacatta appearance.

Chinese Patent Application No. 202011298385.6 disclosed a crystallized frit, jade transparent brick and preparation of the jade transparent brick. Unfortunately, the whiteness and mechanical strength of the jade transparent brick are still not satisfactory, and the whiteness, transparency and mildness of its blank are also needed to be improved.

### SUMMARY

A first object of this application is to provide a jade Calacatta blank with improved flexural strength, whiteness, transparency, mildness and rupture modulus, which contributes high whiteness (75 degrees or more), fine texture, precise alignment and integrated decoration to a ceramic board and sintered stone. Moreover, the ceramic board and the sintered stone are as transparent, mild and fine as natural Calacatta stones.

A second object of this application is to provide a method for preparing the above-mentioned blank.

A third object of this application is to provide a ceramic board, which is prepared from the above-mentioned blank.

A fourth object of this application is to provide a method for preparing the ceramic board, comprising: preparation of the above-mentioned blank; and forming of the blank.

A fifth object of this application is to provide an application of the blank in the preparation of a ceramic board.

Technical solutions of the present disclosure are described as follows.

In a first aspect, the disclosure provides a blank for preparation of a jade Calacatta ceramic board, wherein a raw material of the blank comprises:
10-20 parts by weight of super white kaolin, 3-13 parts by weight of high plastic clay, 10-20 parts by weight of high white ball clay, 0-6 parts by weight of high white bentonite, 0-10 parts by weight of super white quartz sand, 5-16 parts by weight of a frit, 18-30 parts by weight of high white potassium sand, 12-30 parts by weight of high white sodium sand, 0-7 parts by weight of wollastonite, 0-4 parts by weight of talcum clay and 0.1-0.2 parts by weight of a blank reinforcing agent;
the frit comprises 55.0%-68.0% by weight of SiO₂, 13.0-18.0% by weight of Al₂O₃, 3.0-8.0% by weight of CaO, 3.0-7.0% by weight of MgO, 0.5-3.0% by weight of K₂O, 3.0-6.0% by weight of Na₂O, 2.0-6.0% by weight of ZnO, 3.0-6.5% by weight of BaO, 0-1.5% by weight of P₂O₅ and 0-3.0% by weight of CaF₂; and
an iron content of the super white kaolin, an iron content of the high plastic clay and an iron content of the high white ball clay are not higher than 0.2%; and an iron content of the high white potassium sand and an iron content of the high white sodium sand are not higher than 0.1%.

In some embodiments, a plasticity index of the high plastic clay is 9-25; and a dry flexural strength of the high plastic clay is 8-15 MPa.

In some embodiments, the blank further comprises a colorant; and the colorant is 3.5% or less of a total weight of the raw material.

In a second aspect, the disclosure provides a method for preparing the blank, comprising:
(S1) subjecting the raw material of the blank to compounding, ball milling, impurity removal, spray drying and ageing successively to prepare a blank powder;
wherein
process parameters of the ball milling are listed as follows: an addition amount of water is 33-37% of a total weight of the raw material; and a slurry obtained from the ball milling has a specific gravity of 1.65-1.71 and a flow rate of 60 seconds-80 seconds; and
process parameters of the spray drying are listed as follows: a water content of the raw material is controlled to 9-10.4%; a volumetric weight is 0.93-0.96; and grain size distribution: more than 20 mesh: ≤2%; 20-40 mesh: 40-50%; 40-60 mesh: 35-50%; 60-100 mesh: ≤15%; and less than 100 mesh: less than 2%.

In some embodiments, the method further comprises:
(S2-1) adding a colorant to the blank powder obtained by the step (S1) followed by uniform mixing to obtain a colored blank.

In some embodiments, the step (S1) further comprises:
adding a colorant to a slurry obtained from the ball milling followed by uniform mixing, impurity removal, spray drying and ageing to give the blank with a colored line texture.

In a third aspect, the disclosure provides a ceramic board, wherein the ceramic board is prepared from the above-mentioned blank.

In a fourth aspect, the disclosure provides a method for preparing a jade Calacatta ceramic board, comprising:
preparing a blank powder or a colored blank according to the above method; and
subjecting the blank powder or the colored blank to forming to obtain the ceramic board;
wherein
the forming is performed through steps of:
   (S3) subjecting the blank powder and/or the colored blank to distributing according to a preset pattern using a digital distributing machine, pressing formation, and drying to obtain a blank; and
   (S4) overglazing the blank obtained in the step (S3) followed by inkjet printing of a pattern layer, wherein the pattern layer is aligned with the preset pattern of the step (S3) in color and position; and
   (S5-1) sintering the blank obtained from the step (S4) followed by surface treatment and polishing and waxing according to actual requirement; or
   (S5-2) glazing the blank obtained from the step (S4) followed by sintering, and polishing and waxing according to actual requirement.

In a fifth aspect, the disclosure provides an application of the above-mentioned blank in the preparation of a jade Calacatta ceramic board.

In a sixth aspect, the disclosure further provides an application of a blank in the preparation of a jade Calacatta ceramic board, wherein the blank is prepared by the above-mentioned method.

Compared to the prior art, this application has the following beneficial effects.

This application provides a blank, which can improve the flexural strength, whiteness, transparency, mildness, rupture modulus of the blank, contributing a high whiteness (≥ 75 degrees), a fine texture, a precise alignment and an integrated decoration to a ceramic board and a sintered stone. Moreover, the ceramic board and the sintered stone are as transparent, mild and fine as natural Calacatta stones. The disclosure solves the technical problems in the prior art that a high-whiteness sintered stone can only be produced in small size (within 900×1800 mm); the entire distributing of large-size ceramic boards is less performed; the alignment and decoration effect is not satisfactory; and the large size ceramic tile is prone to cracking during the pressing formation due to the poor dry strength and formability of the existing super white blank.

### BRIEF DESCRIPTION OF THE DRAWINGS

Fig. 1 schematically depicts a comparison between a ceramic board of Embodiment C and a marble;
Fig. 2 schematically depicts a jade Calacatta effect of a ceramic board of Embodiment D; and
Fig. 3 schematically depicts light transmission of the ceramic board of Embodiment C.

### DETAILED DESCRIPTION OF EMBODIMENTS

Technical solutions of the present disclosure will be clearly and completely described below with reference to the embodiments and accompanying drawings. Obviously, the embodiments provided herein are merely some embodiments of this disclosure, and are not intended to limit the disclosure. It should be noted that other embodiments made by those skilled in the art based on the content disclosed herein without sparing creative effort should fall within the scope of the present disclosure.

The disclosure will be further described below with reference to embodiments.

A blank for preparation of a jade Calacatta ceramic board, where a raw material of the blank includes:
10-20 parts by weight of super white kaolin, 3-13 parts by weight of high plastic clay, 10-20 parts by weight of high white ball clay, 0-6 parts by weight of high white bentonite, 0-10 parts by weight of super white quartz sand, 5-16 parts by weight of a frit, 18-30 parts by weight of high white potassium sand, 12-30 parts by weight of high white sodium sand, 0-7 parts by weight of wollastonite, 0-4 parts by weight of talcum clay and 0.1-0.2 parts by weight of a blank reinforcing agent.

The frit comprises 55.0%-68.0% by weight of SiO₂, 13.0-18.0% by weight of Al₂O₃, 3.0-8.0% by weight of CaO, 3.0-7.0% by weight of MgO, 0.5-3.0% by weight of K₂O, 3.0-6.0% by weight of Na₂O, 2.0-6.0% by weight of ZnO, 3.0-6.5% by weight of BaO, 0-1.5% by weight of P₂O₅ and 0-3.0% by weight of CaF₂.

An iron content of the super white kaolin, an iron content of the high plastic clay and an iron content of the high white ball clay are not higher than 0.2%. An iron content of the high white potassium sand and an iron content of the high white sodium sand are not higher than 0.1%.

This application provides a blank, which can improve the flexural strength, whiteness, transparency, mildness, rupture modulus of the blank, contributing a high whiteness (≥ 75 degrees), a fine texture, a precise alignment and an integrated decoration to a ceramic board and a sintered stone. Moreover, the ceramic board and the sintered stone are as transparent, mild and fine as natural Calacatta stones.

In this application, high white material with is utilized. Further, an iron content of the high white material is controlled. For example, the iron content of the super white kaolin, the iron content of the high plastic clay and the iron content of the high white ball clay are not higher than 0.2 wt%. The iron content of high white potassium sand and the iron content of the high white sodium sand are not higher than 0.1 wt%. Combing with other combination of the raw material and P₂O₅ of the frit, a whiteness of the blank is effectively developed, which contributes to a transparency thereof.

The firt includes albite, orthoclase, quartz powder, alumina, zinc oxide, calcite, calcined talc, sodium carbonate, barium carbonate, calcium fluoride, apatite and so on. The above materials are mixed, melted in 1450-1550°C and water quenched to give a crystallized frit.

In an embodiment, a plasticity index of the high plastic clay is 9-25. A dry flexural strength of the high plastic clay is 8-15 MPa.

The high plastic clay with the plasticity index of 9-25 and the dry flexural strength of 8-15 MPa is introduced to improve the flexural strength of the blank from 2.8-3.0 MPa to 3.5-4.8 MPa, which can attenuate the decline in the failure resistance of the blank caused by turbulence and vibration during the drying, glazing and storing process and high moisture content in the glazing operation.

In an embodiment, the blank further includes a colorant, and the colorant is 3.5% or less of a total weight of the raw material.

The ceramic board herein is allowed to be further decorated by a colorant according to a requirement based on jade Calacatta effect. When a blank powder is colorful, multiple channels can be used for distributing material with multi-level and individuation, such that the ceramic board is as transparent and mild as Calacatta stones. Also, the blank powder can be performed distributing material according to a preset pattern so as to improve a decoration of the ceramic board.

A method for preparing the blank, including:
(S1) The raw material of the blank is subjected to compounding, ball milling, impurity removal, spray drying and ageing successively to prepare a blank powder.
process parameters of the ball milling are listed as follows: an addition amount of water is 33-37% of a total weight of the raw material; and a slurry obtained from the ball milling has a specific gravity of 1.65-1.71 and a flow rate of 60 s-80 s.

Process parameters of the spray drying are listed as follows: a water content of the raw material is controlled to 9-10.4%; a volumetric weight is 0.93-0.96; and grain size distribution: more than 20 mesh: ≤2%; 20-40 mesh: 40-50%; 40-60 mesh: 35-50%; 60-100 mesh: ≤15%; and less than 100 mesh: less than 2%.

Different types of blanks can be prepared according to requirements. A super white transparent material can be prepared through the step (S1). The step (S1) can be optimized to prepare colorful powder. The colorful powder can be prepared by dry mixing or wet mixing. The dry mixing is as step (S2-1) and the wet mixing is as step (S2-2).
(S2-1) A colorant to the blank powder obtained by the step (S1) is added followed by uniform mixing to obtain a colored blank.
(S2-2) A colorant to the blank powder obtained by the step (S1) after ball milling is added followed by uniform mixing, impurity removal, spray drying and ageing successively to obtain the blank with a colored line texture.

A ceramic board, where the ceramic board is prepared from the above-mentioned blank.

The ceramic board herein can be used as a ceramic board or a sintered stone. The above-mentioned blank is utilized, which improves the flexural strength of the blank and reduces the breakage, such that a large size ceramic board can be produced of which a thickness thereof is 3-20 mm and a size thereof includes 900×2700 mm, 1200×2800 mm, 1600×3200 mm and so on. The disclosure solves the technical problems in the prior art that a high-whiteness sintered stone can only be produced in small size (within 900×1800 mm); the entire distributing of large-size ceramic boards is less performed; the alignment and decoration effect is not satisfactory; and the large size ceramic tile is prone to cracking during the pressing formation due to the poor dry strength and formability of the existing super white blank.

A method for preparing a jade Calacatta ceramic board, including: a blank powder or a colored blank is prepared according to the above method. The blank powder or the colored blank is subjected to forming to obtain the ceramic board.

The forming is performed through steps as follows.
(S3) The blank powder and/or the colored blank is subjected to distributing according to a preset pattern using a digital distributing machine, pressing formation, and drying to obtain a blank.
(S4) The blank obtained in the step (S3) is overglazed followed by inkjet printing of a pattern layer, where the pattern layer is aligned with the preset pattern of the step (S3) in color and position.

Step (S5-1) or step (S5-2) is performed according to a requirement after the step (S4).

When glazing in the steps (S3) and (S4), the pattern layer is aligned to the preset pattern in distributing material, such that the pattern in the inkjet printing is overlapped to the preset pattern.
(S5-1) The blank obtained from the step (S4) is sintered followed by surface treatment and polishing and waxing according to actual requirement.

In the step (S5-1), the blank can be glazed or not after distributing material by the digital distributing machine. A blank without glazing is allowed to be scraped, polished and waxed. Type of polish includes semi-polish, full-polish, matte-polish or non-polish.
(S5-2) The blank obtained from the step (S4) is glazed followed by sintering, and polishing and waxing according to actual requirement.

In the step (S5-2), pattern layer is aligned to the preset pattern in distributing material. The effect glaze includes matte glaze, bright glaze, full polished glaze, dry grain glaze and so on. Types of polish include semi-polish, full-polish, matte-polish or non-polish. Different process contributes different effect.

Type of polish includes semi-polish, full-polish, matte-polish and non-polish.

An application of the above-mentioned blank in the preparation of a jade Calacatta ceramic board.

An application of a blank in the preparation of a jade Calacatta ceramic board, wherein the blank is prepared by the above-mentioned method.

The overglaze and a polished glaze herein can be replaced by a well-known glaze.

In an embodiment, the overglaze includes: 7 parts by weight of qidao clay, 34 parts by weight of orthoclase, 11 parts by weight of albite, 15 parts by weight of burning soil, 11 parts by weight of quartz powder, 12 parts by weight of calcined alumina, 3 parts by weight of dolomite, 8 parts by weight of frit A and 8 parts by weight of zirconium silicate. 40 wt% of water is added followed by ball milling, sieving and deironing. A flow rate of a glaze slurry after ball milling is 45-80 s. A specific gravity is 1.82, then the sieving is performed by a 325-mesh screen, and a sieve residue is 0.5-1.0 g/density cup. The overglaze is glazed by a pouring glaze method, and an amount of the overglaze is 75-85 g/dish (300 mm×600 mm).

In an embodiment, the polished glaze includes: 7 parts by weight of qidao clay, 26 parts by weight of orthoclase, 10 parts by weight of albite, 6 parts by weight of calcined talc, 3 parts by weight of dolomite, 5 parts by weight of zinc oxide, 3 parts by weight of burning soil, 2 parts by weight of calcined alumina, 14 parts by weight of frit A, 5 parts by weight of barium carbonate and 7 parts by weight of quartz. 40 wt% of water is added followed by ball milling, sieving and deironing. A flow rate of a glaze slurry after ball milling is 45-80 s. A specific gravity is 1.82, and then the sieving is performed using a 325-mesh screen, and a sieve residue is 0.5-1.0 g/density cup. The polished glaze is glazed by a pouring glaze method, and an amount of the polished glaze is 80-95 g/dish (300 mm×600 mm in size).

### Embodiment A

The raw material of a frit includes albite, orthoclase, quartz powder, alumina, zinc oxide, calcite, calcined talc, sodium carbonate, barium carbonate, calcium fluoride and apatite. The raw material is mixed, melted at 1530°C and quenched with water to give a crystallized frit. The frit includes: 58.13 wt% of SiO₂, 14.72 wt% of Al₂O₃, 3.89 wt% of CaO, 5.2 wt% of MgO, 0.69 wt% of K₂O, 5.89 wt% of Na₂O, 4.06 wt% of ZnO, 4.42 wt% of BaO, 0.49 wt% of P₂O₅ and 2.51 wt% of CaF₂.

The raw material composition of a blank is shown in Table 1. The super white kaolin, high plastic clay and the high white ball clay all have an iron content of 0.2% or less. The iron content of high white potassium sand and the iron content of the high white sodium sand are not higher than 0.1%. The plasticity index of the high plastic clay is 15, and the flexural strength of the high plastic clay is 9 MPa. Process parameters of the ball milling are listed as follows: the water addition amount is 35% of a total weight of the raw material; a slurry obtained from the ball milling has a specific gravity of 1.70 and a flow rate of 70 s; and a sieve residue is 0.6 wt% by using a 250-mesh screen.

**Table 1 Raw material composition of blanks of Embodiment A and Comparative Embodiments A1-A5**

| Compone nt (part by weight) | Comparat ive embodim ent A1 | Comparat ive embodim ent A2 | Comparat ive embodim ent A3 | Comparat ive embodim ent A4 | Comparat ive embodim ent A5 | Embodim ent A |
|---|---|---|---|---|---|---|
| Super white kaolin | 0 | 14.4 | 14.4 | 14.4 | 14.4 | 14.4 |
| High plastic clay | 12.2 | 0 | 12.2 | 12.2 | 12.2 | 12.2 |
| High white ball clay | 10 | 10 | 0 | 10 | 10 | 10 |
| High white bentonite | 4 | 4 | 4 | 4 | 4 | 4 |
| Frit | 11.8 | 11.8 | 11.8 | 11.8 | 11.8 | 11.8 |
| High white potassium sand | 22.5 | 22.5 | 22.5 | 0 | 22.5 | 22.5 |
| High white sodium sand | 27 | 27 | 27 | 27 | 0 | 27 |
| Wollaston ite | 1.5 | 1.5 | 1.5 | 1.5 | 1.5 | 1.5 |
| blank reinforcin g agent | 0.35 | 0.35 | 0.35 | 0.35 | 0.35 | 0.35 |

The raw materials of the blanks in Embodiment A and Comparative Embodiments A1-A5 are respectively subjected to compounding, ball milling, deironing, spray drying and ageing to give a blank powder, where process parameters of the spray drying are listed as follows: including: the water content is controlled to be 10%; the volumetric weight is 0.95; and the grain size distribution is: more than 20 mesh: 2%; 20-40 mesh: 45%; 40-60 mesh: 36%; 60-100 mesh: 15%; and less than 100 mesh: 2%. In this embodiment, the colored powder is prepared by a wet mixing method. 100 parts by weight of a glaze slurry (dry weight) obtained by the ball milling is added with a silver-gray colorant which is 0.12% of a total weight of the glaze slurry, and then subjected to spray drying to give a light gray powder. Similarly, 100 parts by weight of a glaze slurry (dry weight) obtained by the ball milling is added with 0.1 wt% of black colorant, 0.05 wt% of a silver-gray colorant and 0.03 wt% of a deep coffee colorant, and then subjected to spray drying to give a dark-gray powder.

The blank powder, the light-gray powder and the dark-gray powder are subjected to distributing according to a preset pattern by using a digital distributing machine, and pressing formation to form the blank. The blank is dried, glazed with an overglaze, printed by inkjet printing with a pattern consistent with the preset pattern in color and position, glazed with a polished glaze, sintered, polished at the front and back surfaces and waxed to give a final ceramic board product.

Performance tests are performed on Comparative embodiments A1-A5 and Embodiment A.

**Table 2 Performance tests of Comparative Embodiments A1-A5 and Embodiment A**

| Component (wt%) | Comparati ve embodime nt A1 | Compara tive embodim ent A2 | Compar ative embodi ment A3 | Compar ative embodi ment A4 | Compar ative embodi ment A5 | Embod iment A |
|---|---|---|---|---|---|---|
| Dry strength of blank (MPa) | 2.82 | 2.24 | 2.78 | 4.61 | 4.91 | 3.87 |
| Texture of blank | Glassy | Mild | Mild | Crude | Crude | Mild |
| Whiteness (°) | 63.4 | 65.8 | 64.5 | 74.2 | 72.8 | 75.3 |
| Transparency (%) | 4.22% | 4.66 | 4.17 | 1.69 | 1.99 | 4.01% |
| Light perception of eyes | Yellow light | Yellow light | Yellow light | Red light | Red light | Yellow light |
| Maximum wave transformation | ≤0.35 mm | ≤0.30 mm | ≤0.30 mm | ≤0.1 mm | ≤0.1 mm | ≤0.1 mm |
| Modulus of rupture | 39 | 39 | 42 | 48 | 50 | 48.1 |

### (1) Comparison between Comparative Embodiment A1 and Embodiment A

The blank powder of Comparative Embodiment A1 is free of a super white kaolin, which causes a decrease in the mechanism strength of the ceramic board of Comparative Embodiment A1. Specifically, the ceramic board A1 merely has a dry strength of 2.82 MPa and a rupture modulus of 39. Meanwhile, the whiteness of Comparative embodiment A1 is 63.4°, and the maximum wave transformation of Comparative embodiment A1 is 0.25 mm larger than that of Embodiment A, which seriously affects the flatness of a final product. On the contrary, due to the addition of the super white kaolin, the ceramic board of Embodiment A has improved mechanical strength and a milder texture, and exhibits a jade Calacatta effect.

### (2) Comparison between Comparative embodiment A2 and Embodiment A

The blank powder of Comparative Embodiment A2 is free of a high plastic clay. By contrast, in Embodiment A, the high plastic clay with a specific plasticity index and flexural strength can attenuate the decline in the failure resistance of the blank caused by turbulence and vibration during the drying, glazing and storing process and high moisture content in the glazing operation. Therefore, the dry strength and the modulus of rupture of Comparative embodiment A2 are decreased. Although the Comparative Embodiment A2 exhibits a mild texture, the maximum wave transformation thereof is relatively high, such that a flatness and an entire decoration effect of the ceramic board of Comparative embodiment A2 are not sufficient, failing to achieve the Calacatta effect. It can be concluded that the high plastic clay with a specific plasticity index and flexural strength is capable of improving the mechanical strength and flatness of a blank, and promoting the Calacatta effect.

### (3) Comparison between Comparative embodiment A3 and Embodiment A

The blank powder of Comparative embodiment A3 is free of a high white ball clay, which causes a decline in the mechanical strength of a blank of Comparative embodiment A3 (dry strength: 2.78 MPa; and the rupture modulus: 42). Meanwhile, the whiteness of Comparative embodiment A3 is 64.5°, which is also lower than that of Embodiment A. The maximum wave transformation of Comparative embodiment A3 reaches 0.30 mm, which will seriously affect the flatness of a final product. Moreover, the blank of Comparative embodiment A3 cannot exhibit a jade Calacatta effect. Therefore, the high white ball clay is capable of improving the mechanical strength, flatness and Calacatta effect of a blank.

### (4) Comparison between Comparative embodiments A4-A5 and Embodiment A

The blank powder of Comparative embodiment A4 is free of a high white potassium sand, and the blank powder of Comparative embodiment A5 is free of a high white sodium sand. The texture of Comparative embodiments A4-A5 is poorer than that of Embodiment A which contains the high white potassium sand and the high white sodium sand. Therefore, it can be concluded that lacking either the high white potassium sand or the high white sodium sand will affect the transparency and the texture of the blank.

In summary, the mechanical strength and the Calacatta effect of the blank can be improved by compounding super white kaolin, high plastic clay, high white ball clay, high white bentonite, frit, high white potassium sand, high white sodium sand, wollastonite and a blank reinforcing agent together.

### Embodiment B

The raw material of a frit includes albite, orthoclase, quartz powder, alumina, zinc oxide, calcite, calcined talc, sodium carbonate, barium carbonate, calcium fluoride and apatite. The raw material is mixed, melted at 1530°C and quenched with water to give a crystallized frit. The frit includes: 58.13 wt% of SiO₂, 14.72 wt% of Al₂O₃, 3.89 wt% of CaO, 5.2 wt% of MgO, 0.69 wt% of K₂O, 5.89 wt% of Na₂O, 4.06 wt% of ZnO, 4.42 wt% of BaO, 0.49 wt% of P₂O₅ and 2.51 wt% of CaF₂.

The raw material of a blank includes 17 parts by weight of super white kaolin, 10 parts by weight of high plastic clay, 15 parts by weight of high white ball clay, 2 parts by weight of high white bentonite, 7 parts by weight of super white quartz sand, 15 parts by weight of the frit, 24 parts by weight of high white potassium sand, 22 parts by weight of high white sodium-bearing, 1.5 parts by weight of wollastonite, 3 parts by weight of talcum clay and 0.35 parts by weight of blank reinforcing agent. The iron content of super white kaolin, the iron content of high plastic clay, the iron content of high white ball clay, the iron content of high white potassium sand and the iron content of high white sodium sand are shown in Table 3. The plasticity index of high plastic clay and the dry flexural strength of high plastic clay are shown in Table 3. Process parameters of the ball milling are listed as follows: the water addition amount is 35% of a total weight of the raw material; a slurry obtained from the ball milling has a specific gravity of 1.70 and a flow rate of 70 s; and a sieve residue is 0.6 wt% by using a 250-mesh screen.

**Table 3 Parameters of blank of Embodiment B and Comparative Embodiments B1-B7**

| Parameter | Co mp arat ive Em bod ime nt B1 | Compar ative Embodi ment B2 | Compar ative Embodi ment B3 | Compar ative Embodi ment B4 | Compar ative Embodi ment B5 | Co mp arat ive Em bod ime nt B6 | Co mp arat ive Em bod ime nt B7 | Em bod ime nt B |
|---|---|---|---|---|---|---|---|---|
| Iron content of super white kaolin (wt%) | 0.4 | 0.2 | 0.2 | 0.2 | 0.2 | 0.2 | 0.2 | 0.2 |
| Iron content of high plastic clay (wt%) | 0.2 | 0.4 | 0.2 | 0.2 | 0.2 | 0.2 | 0.2 | 0.2 |
| Iron content of high white ball clay (wt%) | 0.2 | 0.2 | 0.4 | 0.2 | 0.2 | 0.2 | 0.2 | 0.2 |
| Iron content of high white potassium sand (wt%) | 0.1 | 0.1 | 0.1 | 0.2 | 0.1 | 0.1 | 0.1 | 0.1 |
| Iron content of high white sodium sand (wt%) | 0.1 | 0.1 | 0.1 | 0.1 | 0.2 | 0.1 | 0.1 | 0.1 |
| Plasticity index of high plastic clay | 15 | 15 | 15 | 15 | 15 | 8 | 15 | 15 |
| Dry flexural strength of high plastic clay (MPa) | 10 | 10 | 10 | 10 | 10 | 10 | 7 | 10 |

The raw materials of the blanks in Embodiment B and Comparative Embodiments B1-B7 are respectively subjected to compounding, ball milling, deironing, spray drying and ageing to give a blank powder, where process parameters of the spray drying are listed as follows: including: the water content is controlled to be 10%; the volumetric weight is 0.95; and the grain size distribution is: more than 20 mesh: 2%; 20-40 mesh: 45%; 40-60 mesh: 36%; 60-100 mesh: 15%; and less than 100 mesh: 2%. In this embodiment, the colored powder is prepared by a dry mixing method. 100 parts by weight of a blank powder (dry weight) is added with a silver-gray colorant which is 0.1% of a total weight of the blank powder, and then subjected to mixing and spray drying to give a light gray powder. Similarly, 100 parts by weight of a blank powder (dry weight) is added with 0.1 wt% of black colorant, 0.05 wt% of a silver-gray colorant and 0.03 wt% of a deep coffee colorant, and then subjected to mixing and spray drying to give a dark-gray powder.

The blank powder, the light-gray powder and the dark-gray powder are subjected to distributing according to a preset pattern by using a digital distributing machine, and pressing formation to form the blank. The blank is dried, glazed with an overglaze, printed by inkjet printing with a pattern consistent with the preset pattern in color and position, glazed with a polished glaze, sintered, polished at the front and back surfaces and waxed to give a final ceramic board product.

Performance tests are performed on Comparative Embodiments B1-B7 and Embodiment B.

**Table 4 Performance tests of Comparative Embodiments B1-B7 and Embodiment B**

| Content( wt%) | Comp arative Embo diment B1 | Compa rative Embod iment B2 | Compa rative Embod iment B3 | Compa rative Embod iment B4 | Compa rative Embod iment B5 | Comp arative Embo diment B6 | Comp arative Embo diment B7 | Embo diment B |
|---|---|---|---|---|---|---|---|---|
| Dry strength of blank (MPa) | 4.06 | 4.15 | 4.13 | 4.08 | 4.08 | 2.83 | 2.66 | 4.12 |
| Texture of blank | Mild | Mild | Mild | Mild | Mild | Mild | Mild | Mild |
| Whitenes s (°) | 63.0 | 64.1 | 64.3 | 74.2 | 75.2 | 80.5 | 79.2 | 80.6 |
| Transpar ency (%) | 1.77% | 1.85% | 1.23% | 2.65% | 2.84% | 4.74% | 4.72% | 4.83% |
| Light perceptio n of eyes | Red light | Red light | Red light | Yellow light | Yellow light | Yello w light | Yello w light | Yello w light |
| Maximu m wave transform ation | ≤0.15 mm | ≤0.15 mm | ≤0.15 mm | ≤0.15 mm | ≤0.15 mm | ≤0.15 mm | ≤0.15 mm | ≤0.15 mm |
| Modulus of rupture | 48.2 | 47.5 | 47.3 | 48.3 | 48.8 | 49.1 | 48 | 48.9 |

### (1) Comparison between Comparative Embodiments B 1-B3 and Embodiment B

The iron content of super white kaolin in Comparative Embodiment B1 is 0.4 wt%; the iron content of high plastic clay in Comparative Embodiment B2 is 0.4 wt%; the iron content of high white ball clay of Comparative Embodiment B3 is 0.4 wt%. The above-mentioned iron contents are higher than 0.2 wt%, so that the whiteness and the transparency in Comparative Embodiments B1-B3 are decreased. Therefore, the iron content of super white kaolin, the iron content of high plastic clay and the iron content of high white ball clay are required to be not higher than 0.2 wt%.

### (2) Comparison between Comparative Embodiments B4-B5 and Embodiment B

The iron content of high white potassium sand in Comparative Embodiment B4 is 0.2 wt%; and the iron content of high white sodium sand in Comparative Embodiment B5 is 0.2 wt%. The above-mentioned iron contents are higher than 0.1 wt%, so that the whiteness and the transparency in Comparative Embodiments B4-B5 both are decreased. Therefore, the iron content of high white potassium sand and the iron content of high white sodium sand are required not higher than 0.1 wt%.

### (3) Comparison between Comparative Embodiments B6-B7 and Embodiment B,

The plasticity index of high plastic clay in Comparative Embodiment B6 is low to 8, whcih cause a decrease in the dry strength of blank of Comparative Embodiment B6. The dry flexural strength of high plastic clay in Comparative Embodiment B7 is low 4 MPa, which causes a decrease in the dry strength of blank of Comparative Embodiment B7. Therefore, a low plasticity index of high plastic clay herein will cause decreases in dry strength of blank, and a low dry flexural strength of high plastic clay herein will cause increases in breakage of production of ceramic boards.

### Embodiment C

The raw material of a frit includes albite, orthoclase, quartz powder, alumina, zinc oxide, calcite, calcined talc, sodium carbonate, barium carbonate, calcium fluoride and apatite. The raw material is mixed, melted at 1530°C and quenched with water to give a crystallized frit. The frit includes: 67.80 wt% of SiO₂, 13.01 wt% of Al₂O₃, 3.02 wt% of CaO, 3.11 wt% of MgO, 0.48 wt% of K₂O, 3.00 wt% of Na₂O, 2. 15wt% of ZnO, 3.07 wt% of BaO, 1.48 wt% of P₂O₅ and 2.88 wt% of CaF₂.

A raw material of a blank, includes 10 parts by weight of super white kaolin, 13 parts by weight of high plastic clay, 10 parts by weight of high white ball clay, 10 parts by weight of super white quartz sand, 16 parts by weight of the frit, 18 parts by weight of high white potassium sand, 30 parts by weight of high white sodium-bearing, 7 parts by weight of wollastonite, 4 parts by weight of talcum clay and 1.2 parts by weight of blank reinforcing agent. The iron content of super white kaolin is not higher than 0.1 wt%. The iron content of high plastic clay and the iron content of high white ball clay are not higher than 0.2 wt%. The iron content of high white potassium sand and the iron content of high white sodium sand are not higher than 0.1 wt%. The plasticity index of high plastic clay is 25 and the dry flexural strength of high plastic clay is 8 MPa. Process parameters of the ball milling are listed as follows: the water addition amount is 33% of a total weight of the raw material; a slurry obtained from the ball milling has a specific gravity of 1.71 and a flow rate of 80 seconds; and a sieve residue is 0.7 wt% by using a 250-mesh screen.

The raw materials of the blank in Embodiment C are subjected to compounding, ball milling, deironing, spray drying and ageing to give a blank powder, where process parameters of the spray drying are listed as follows: the water content is controlled to be 10%; the volumetric weight is 0.95; and the grain size distribution is: more than 20 mesh: 2%; 20-40 mesh: 45%; 40-60 mesh: 36%; 60-100 mesh: 15%; and less than 100 mesh: 2%. In this embodiment, the colored powder is prepared by a dry mixing method. 100 parts by weight of a blank powder (dry weight) is added with a silver-gray colorant which is 0.1% of a total weight of the blank powder, and then subjected to mixing and spray drying to give a light gray powder. Similarly, 100 parts by weight of a blank powder (dry weight) is added with 0.1 wt% of black colorant, 0.05 wt% of a silver-gray colorant and 0.03 wt% of a deep coffee colorant, and then subjected to mixing and spray drying to give a dark-gray powder.

The blank powder, the light-gray powder and the dark-gray powder are subjected to distributing according to a preset pattern by using a digital distributing machine, and pressing formation to form the blank. The blank is dried, glazed with an overglaze, printed by inkjet printing with a pattern consistent with the preset pattern in color and position, glazed with a polished glaze, sintered, polished at the front and back surfaces and waxed to give a final ceramic board product.

### Embodiment D

The raw material of a frit includes albite, orthoclase, quartz powder, alumina, zinc oxide, calcite, calcined talc, sodium carbonate, barium carbonate, calcium fluoride and apatite. The raw material is mixed, melted at 1530°C and quenched with water to give a crystallized frit. The frit includes: 56.22 wt% of SiO₂, 18.01 wt% of Al₂O₃, 3.66 wt% of CaO, 6.88 wt% of MgO, 2.74 wt% of K₂O, 5.12 wt% of Na₂O, 2.15 wt% of ZnO, 4.95 wt% of BaO, 0.11 wt% of P₂O₅ and 0.16 wt% of CaF₂.

The raw material of a blank includes 20 parts by weight of super white kaolin, 3 parts by weight of high plastic clay, 20 parts by weight of high white ball clay, 6 parts by weight of high white bentonite, 5 parts by weight of super white quartz sand, 5 parts by weight of the frit, 18 parts by weight of high white potassium sand, 12 parts by weight of high white sodium-bearing, 1 part by weight of wollastonite and 0.1 parts by weight of blank reinforcing agent. The iron content of super white kaolin, the iron content of high plastic clay and the iron content of high white ball clay are not higher than 0.2 wt%. The iron content of high white potassium sand and the iron content of high white sodium sand are not higher than 0.1 wt%. the plasticity index of high plastic clay is 15 and the flexural strength of high plastic clay is 9 MPa. Process parameters of the ball milling are listed as follows: the water addition amount is 34% of a total weight of the raw material; a slurry obtained from the ball milling has a specific gravity of 1.68 and a flow rate of 70 seconds; and a sieve residue is 0.6 wt% by using a 250-mesh screen.

The raw materials of the blank in Embodiment D are subjected to compounding, ball milling, deironing, spray drying and ageing to give a blank powder, where process parameters of the spray drying are listed as follows: the water content is controlled to be 10%; the volumetric weight is 0.95; and the grain size distribution is: more than 20 mesh: 2%; 20-40 mesh: 45%; 40-60 mesh: 36%; 60-100 mesh: 15%; and less than 100 mesh: 2%. In this embodiment, the colored powder is prepared by a dry mixing method. 100 parts by weight of a blank powder (dry weight) is added with a silver-gray colorant which is 0.1% of a total weight of the blank powder, and then subjected to mixing and spray drying to give a light gray powder. Similarly, 100 parts by weight of a blank powder (dry weight) is added with 0.1 wt% of black colorant, 0.05 wt% of a silver-gray colorant and 0.03 wt% of a deep coffee colorant, and then subjected to mixing and spray drying to give a dark-gray powder.

The blank powder, the light-gray powder and the dark-gray powder are subjected to distributing according to a preset pattern by using a digital distributing machine, and pressing formation to form the blank. The blank is dried, glazed with an overglaze, printed by inkjet printing with a pattern consistent with the preset pattern in color and position, glazed with a polished glaze, sintered, polished at the front and back surfaces and waxed to give a final ceramic board product.

### Comparative Embodiment E

The raw material of a frit, includes super white washed orthoclase, super white albite, quartz powder, alumina, calcite, calcined talc, sodium carbonate, barium carbonate, calcium fluoride, calcium phosphate and spodumene. The raw material is mixed, melted at 1530°C and quenched with water to give a crystallized frit. Chemical compositions of the crystallization frit include: 43.93 wt% of SiO₂, 28.49 wt% of Al₂O₃, 12.09 wt% of CaO, 1.71 wt% of MgO, 1.78 wt% of K₂O, 9.32 wt% of Na₂O, 1.78 wt% of BaO, 0.40 wt% of P₂O₅ and 0.50 wt% of CaF₂.

The raw material of a transparent blank includes 5 parts by weight of super white kaolin, 13 parts by weight of high white ball clay, 4 parts by weight of high white bentonite, 28 parts by weight of super white quartz sand, 17 parts by weight of high white potassium sand, 2 parts by weight of wollastonite 1 part by weight of calcined talc and 30 parts by weight of crystallization frit.

The raw materials of the blanks in Comparative Embodiments E are respectively subjected to compounding, ball milling, deironing, spray drying and ageing to give a blank powder, where process parameters of the ball milling are listed as follows: the water addition amount is 35% of a total weight of the raw material; a slurry obtained from the ball milling has a specific gravity of 1.65 and a flow rate of 60 seconds; and a sieve residue is 0.6 wt% by using a 250-mesh screen. 100 parts by weight of a glaze slurry (dry weight) obtained by the ball milling is added with a dark black colorant which is 0.17% of a total weight of the glaze slurry and a dark gray colorant which is 0.3% of a total weight of the glaze slurry, and then subjected to spray drying to give a black powder. 100 parts by weight of a glaze slurry (dry weight) obtained by the ball milling is added with a dark black colorant which is 0.018% of a total weight of the glaze slurry, a dark gray colorant which is 0.125% of a total weight of the glaze slurry and orange colorant which is 0.018% of a total weight of the glaze slurry, and then subjected to spray drying to give a yellow powder.

The blank powder, the black powder, the light gray powder and the yellow powder are subjected to distributing according to a preset pattern by using a digital distributing machine, and pressing formation to form the blank. The transparent blank is sintered in 1170-1200°C, polished at front and back surfaces and waxed to give a final ceramic board product.

Performance tests are performed on Embodiments C and D and Comparative Embodiment E, as shown in Table 5.

**Table 5 Performance tests of Embodiment C, Embodiment D and Comparative Embodiment E**

| Component (wt%) | Embodimen t C | Embodiment D | Comparative Embodiment E |
|---|---|---|---|
| Dry strength of blank (MPa) | 4.25 | 4.26 | 3.89 |
| Effect of blank | Mild | Mild | Mild |
| Whiteness (°) | 80.6 | 79.5 | 71 |
| Transparency (%) | 5.26% | 5.97% | 3.10% |
| Light perception of eyes | Yellow light | Yellow light | Yellow light |
| Maximum wave transformation | ≤0.15mm | ≤0.2mm | ≤0.15mm |
| Modulus of rupture | 46.9 | 48.8 | 46.0 |

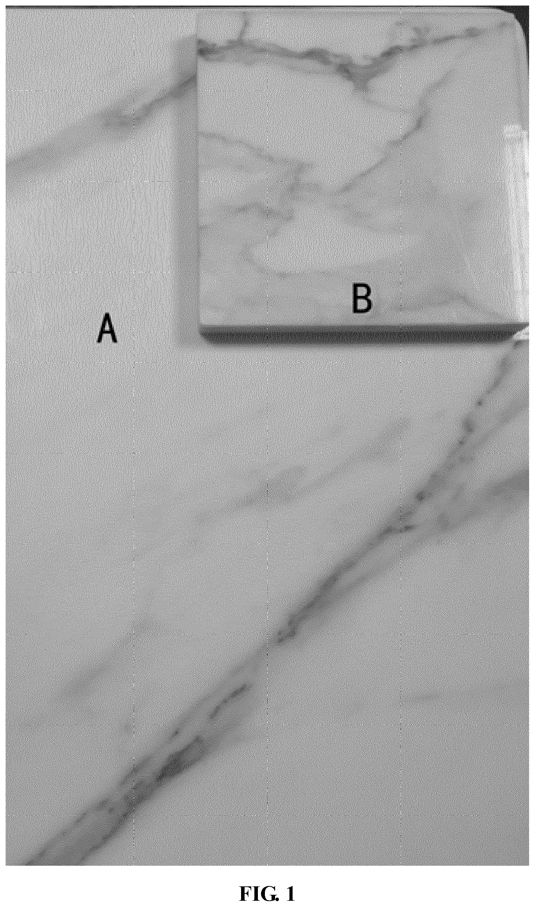

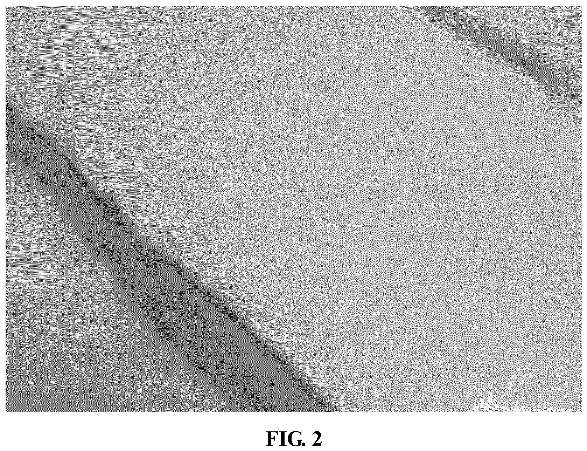

The Comparative Embodiment E is disclosed by Chinese Patent Application No. 202011298385.6. The blank of Comparative Embodiment E is free of high plastic clay, and the plasticity index and the flexural strength of the high plastic clay are not limited. In addition, the iron content of the super white kaolin, the iron content of the high plastic clay, the iron content of high white ball clay, the iron content of high white potassium sand and the iron content of high white sodium sand are not limited. The blank of Comparative Embodiment E is mild; however, the whiteness thereof is 71° and the transparency thereof is 3.1%, which is lower than those of Embodiments C and D, and the black powder of Comparative Embodiment E fails to provide a jade Calacatta effect. The blank of Embodiments C and the blank of Embodiment D are with high plastic clay and the plasticity index of the high plastic clay and the dry flexural strength of the high plastic clay are limited. In addition, the iron content of the super white kaolin, the iron content of the high plastic clay and the iron content of high white ball clay are not higher than 0.2 wt%; and the iron content of high white potassium sand and the iron content of high white sodium sand are not higher than 0.1 wt%. The Embodiment C and the Embodiment E both satisfy jade Calacatta effect, and the whiteness, the transparency and the dry strength of the Embodiment C and the Embodiment E are greater than that of the Embodiment E. The jade Calacatta effects of Embodiment C and Embodiment D are schematically depicted in Fig. 1 and Fig. 2, respectively.

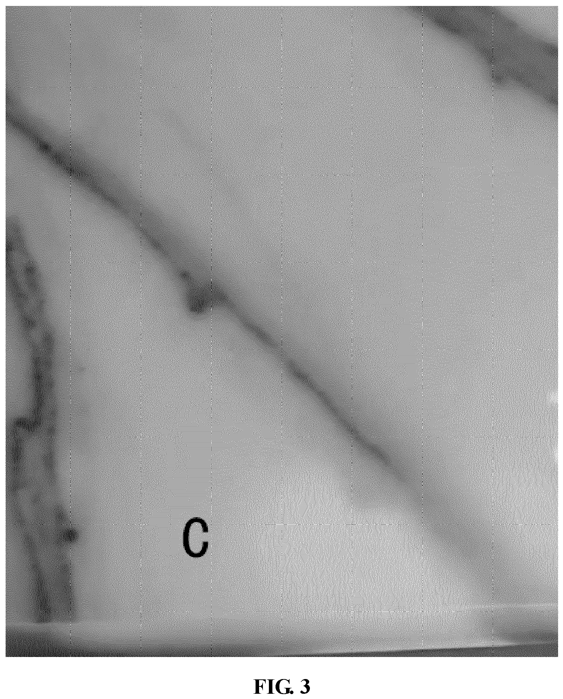

It should be noted that, in Fig. 1, part A is the third ceramic board and part B is a marble. Apparently, the third ceramic board has an imitation stone effect. Fig. 3 is an image of the third ceramic board when a light source is illuminated from bottom to top, and obviously the transparency of the third ceramic board is great. As shown in part C of the Fig. 3, colors are vaguely revealed from the blank (dark in middle and light gray in edge), which has exhibited the Calacatta effect. The Fig. 2 schematically depicts a Calacatta effect of the fifth ceramic board. Therefore, the ceramic board herein has satisfied an integrity, a transparency and an imitation stone effect.

### Embodiment F

The raw material of a frit includes albite, orthoclase, quartz powder, alumina, zinc oxide, calcite, calcined talc, sodium carbonate, barium carbonate, calcium fluoride and apatite. The raw material is mixed, melted at 1530°C and quenched with water to give a crystallized frit. The frit includes:56.22 wt% of SiO₂, 18.01 wt% of Al₂O₃, 3.66 wt% of CaO, 6.88 wt% of MgO, 2.74 wt% of K₂O, 5.12 wt% of Na₂O, 2.15wt% of ZnO, 4.95 wt% of BaO, 0.11 wt% of P₂O₅ and 0.16 wt% of CaF₂.

The raw material of a green body, includes 10 parts by weight of super white kaolin, 3 parts by weight of high plastic clay, 13 parts by weight of high white ball clay, 6 parts by weight of high white bentonite, 5 parts by weight of super white quartz sand, 5 parts by weight of frit, 28 parts by weight of high white kalium-bearing sand, 16 parts by weight of high white sodium-bearing, 4 parts by weight of wollastonite and 0.1 parts by weight of green body enhancer. The iron content of super white kaolin, the iron content of high plastic clay and the iron content of high white ball clay are not higher than 0.2 wt%. The iron content of high white kalium-bearing sand and the iron content of high white sodium-bearing sand are not higher than 0.1 wt%. The plasticity index of high plastic clay is 15 and the flexural strength of high plastic clay is 9 MPa. Process parameters of the ball milling are listed as follows: the water addition amount is 34% of a total weight of the raw material; a slurry obtained from the ball milling has a specific gravity of 1.68 and a flow rate of 70 s; and a sieve residue is 0.6 wt% by using a 250-mesh screen.

The raw materials of the blanks in Embodiment F are subjected to compounding, ball milling, deironing, spray drying and ageing to give a blank powder, where process parameters of the spray drying are listed as follows: including: the water content is controlled to be 10%; the volumetric weight is 0.95; and the grain size distribution is: more than 20 mesh: 2%; 20-40 mesh: 45%; 40-60 mesh: 36%; 60-100 mesh: 15%; and less than 100 mesh: 2%. In this embodiment, the colored powder is prepared by a dry mixing method. 100 parts by weight of a blank powder (dry weight) is added with a silver-gray colorant which is 0.1% of a total weight of the blank powder, and then subjected to mixing and spray drying to give a light gray powder. Similarly, 100 parts by weight of a blank powder (dry weight) is added with 0.1 wt% of black colorant, 0.05 wt% of a silver-gray colorant and 0.03 wt% of a deep coffee colorant, and then subjected to mixing and spray drying to give a dark-gray powder.

The blank powder, the light gray powder and the dark gray powder are performed distributing material according to a preset pattern by using a digital distributing machine and pressing formation to form the blank. The blank is dried and sintered. Then the green body is scraped, semi-polished and waxed to give a sixth ceramic board.

### Embodiment G

The raw material of a frit includes albite, orthoclase, quartz powder, alumina, zinc oxide, calcite, calcined talc, sodium carbonate, barium carbonate, calcium fluoride and apatite. The raw material is mixed, melted at 1530°C and quenched with water to give a crystallized frit. The frit includes: 58.13 wt% of SiO₂, 14.72 wt% of Al₂O₃, 3.89 wt% of CaO, 5.2 wt% of MgO, 0.69 wt% of K₂O, 5.89 wt% of Na₂O, 4.06 wt% of ZnO, 4.42 wt% of BaO, 0.49 wt% of P₂O₅ and 2.51 wt% of CaF₂.

The raw material of a blank, includes 10 parts by weight of super white kaolin, 13 parts by weight of high plastic clay, 10 parts by weight of high white ball clay, 4 parts by weight of high white bentonite, 11.8 parts by weight of frit, 30 parts by weight of high white potassium sand, 17 parts by weight of high white sodium-bearing, 4.5 parts by weight of wollastonite and 0.35 parts by weight of blank reinforcing agent. The iron content of super white kaolin, the iron content of high plastic clay and the iron content of high white ball clay are not higher than 0.2 wt%. The iron content of high white potassium sand and the iron content of high white sodium sand are not higher than 0.1 wt%. The plasticity index of high plastic clay is 15 and the flexural strength of high plastic clay is 9 MPa. Process parameters of the ball milling are listed as follows: the water addition amount is 35% of a total weight of the raw material; a slurry obtained from the ball milling has a specific gravity of 1.70 and a flow rate of 70 seconds; and a sieve residue is 0.6 et% by using a 250-mesh screen.

The raw materials of the blank are subjected to compounding, ball milling, deironing, spray drying and ageing to give a blank powder, Process parameters of the ball milling are listed as follows: the water addition amount is 35% of a total weight of the raw material; a slurry obtained from the ball milling has a specific gravity of 1.70 and a flow rate of 70 seconds; and a sieve residue is 0.6 wt% by using a 250-mesh screen. 100 parts by weight of a glaze slurry (dry weight) obtained by the ball milling is added with a dark black colorant which is 0.17% of a total weight of the glaze slurry and a dark gray colorant which is 0.3% of a total weight of the glaze slurry, and then subjected to spray drying to give a black powder. 100 parts by weight of a glaze slurry (dry weight) obtained by the ball milling is added with a dark black colorant which is 0.018% of a total weight of the glaze slurry, a dark gray colorant which is 0.125% of a total weight of the glaze slurry and orange colorant which is 0.018% of a total weight of the glaze slurry, and then subjected to spray drying to give a yellow powder.

The blank powder, the black powder, the light gray powder and the yellow powder are subjected to distributing according to a preset pattern by using a digital distributing machine, and pressing formation to form the blank. The transparent blank is sintered in 1170-1200°C to give a final ceramic board product.

### Embodiment H

A blank powder, a dark gray blank powder, a light gray blank powder and a forming process of the Embodiment H are the same with those of Embodiment G The blank powder, the black powder, the light gray powder and the yellow powder are performed distributing material according to a preset pattern by a digital distributing machine and performed pressing formation to form a blank. The blank is dried and glazed with an overglaze by pouring. A pattern in inkjet printing is respected with the preset pattern in color and position. The blank is glazed with a matte glaze by pouring. Then the blank is performed sintering, edging and so on to give a final product.

The matte glaze of Embodiment H includes 37 wt% of orthoclase, 12 wt% of spodumene, 6 wt% of calcite, 5 wt% of wollastonite, 6 wt% of jiepai clay, 3 wt% of calcined kaolin, 12 wt% of barium carbonate, 5 wt% of zinc oxide, 7 wt% of matte frit and 2 wt% calcined alumina. Process parameters of the matte glaze are listed as follows: the flow rate is 30-35 s, the weight proportion of slurry is 1.83, and an amount of the matte glaze is 80 g/dish (300×600 mm).

Performance tests are performed on Embodiments F-H, and a result thereof is shown in Table 6.

**Table 6 Performance tests of Embodiments F-H**

| Content (wt%) | Embodiment F | Embodiment G | Embodiment H |
|---|---|---|---|
| Dry strength of blank (MPa) | 4.22 | 4.13 | 4.37 |
| Texture | Slight mild | Slight mild | Slight mild |
| Whiteness (°) | 76.8 | 73.6 | 74.8 |
| Transparency (%) | 4.99% | 4.85% | 4.3% |
| Light perception of eyes | Yellow light | Yellow light | Yellow light |
| Maximum wave transformation | ≤0.15mm | ≤0.15mm | ≤0.15mm |
| Modulus of rupture | 47.2 | 46.8 | 46.3 |

Mentioned above are merely illustrative of the technical solutions of this disclosure, and not intended to limit the scope of the present disclosure. It should be understood that other Embodiments made by those killed in the art without departing from the spirit of this disclosure should fall within the scope of the present disclosure defined by the appended claims.

## Claims

1. A blank for preparation of a jade Calacatta ceramic board, **characterized in that** a raw material of the blank comprises:
10-20 parts by weight of super white kaolin, 3-13 parts by weight of high plastic clay, 10-20 parts by weight of high white ball clay, 0-6 parts by weight of high white bentonite, 0-10 parts by weight of super white quartz sand, 5-16 parts by weight of a frit, 18-30 parts by weight of high white potassium sand, 12-30 parts by weight of high white sodium sand, 0-7 parts by weight of wollastonite, 0-4 parts by weight of talcum clay and 0.1-0.2 parts by weight of a blank reinforcing agent;
wherein the frit comprises 55.0%-68.0% by weight of SiO₂, 13.0-18.0% by weight of Al₂O₃, 3.0-8.0% by weight of CaO, 3.0-7.0% by weight of MgO, 0.5-3.0% by weight of K₂O, 3.0-6.0% by weight of Na₂O, 2.0-6.0% by weight of ZnO, 3.0-6.5% by weight of BaO, 0-1.5% by weight of P₂O₅ and 0-3.0% by weight of CaF₂; and
an iron content of the super white kaolin, an iron content of the high plastic clay and an iron content of the high white ball clay are not higher than 0.2%; and an iron content of the high white potassium sand and an iron content of the high white sodium sand are not higher than 0.1%.

2. The blank according to claim 1, **characterized in that** a plasticity index of the high plastic clay is 9-25; and a dry flexural strength of the high plastic clay is 8-15 MPa.

3. The blank according to claim 1 or 2, **characterized in that** the blank further comprises a colorant; and the colorant is 3.5% or less of a total weight of the raw material.

4. A method for preparing the blank according to any one of claims 1-3, comprising:
(S1) subjecting the raw material of the blank to compounding, ball milling, impurity removal, spray drying and ageing successively to prepare a blank powder;
wherein process parameters of the ball milling are listed as follows: an addition amount of water is 33-37% of a total weight of the raw material; and a slurry obtained from the ball milling has a specific gravity of 1.65-1.71 and a flow rate of 60 seconds-80 seconds; and
process parameters of the spray drying are listed as follows: a water content of the raw material is controlled to 9-10.4%; a volumetric weight is 0.93-0.96; and grain size distribution: more than 20 mesh: ≤2%; 20-40 mesh: 40-50%; 40-60 mesh: 35-50%; 60-100 mesh: ≤15%; and less than 100 mesh: less than 2%.

5. The method according to claim 4, **characterized in that** the method further comprises:
(S2-1) adding a colorant to the blank powder obtained by the step (S1) followed by uniform mixing to obtain a colored blank.

6. The method according to claim 4, **characterized in that** the step (S1) further comprises:
adding a colorant to a slurry obtained from the ball milling followed by uniform mixing, impurity removal, spray drying and ageing to give the blank with a colored line texture.

7. A ceramic board, **characterized in that** the ceramic board is prepared from the blank according to any one of claims 1-3.

8. A method for preparing a jade Calacatta ceramic board, comprising:
preparing a blank powder or a colored blank according to the method of any one of claims 4-6; and
subjecting the blank powder or the colored blank to forming to obtain the ceramic board;
wherein the forming is performed through steps of:
(S3) subjecting the blank powder and/or the colored blank to distributing according to a preset pattern using a digital distributing machine, pressing formation, and drying to obtain a blank;
(S4) overglazing the blank obtained in the step (S3) followed by inkjet printing of a pattern layer, wherein the pattern layer is aligned with the preset pattern of the step (S3) in color and position; and
(S5-1) sintering the blank obtained from the step (S4) followed by surface treatment and polishing and waxing according to actual requirement; or
(S5-2) glazing the blank obtained from the step (S4) followed by sintering, and polishing and waxing according to actual requirement.

9. The blank according to any one of claims 1-3 for use in the preparation of a jade Calacatta ceramic board.

10. A blank for use in the preparation of a jade Calacatta ceramic board, **characterized in that** the blank is prepared by the method according to any one of claims 4-6.
